# FASCICULE DE BREVET EUROPEEN

(11) **EP 0 708 893 B1**
(45) Date de publication et mention de la délivrance du brevet: **27.08.1997**
(21) Numéro de dépôt: 95917392.3
(22) Date de dépôt: 13.04.1995
(51) Int. Cl.: F16D 13/70

(54) **PLATEAU DE REACTION POUR EMBRAYAGE A FRICTION, NOTAMMENT POUR VEHICULE AUTOMOBILE**
GEGENANPRESSPLATTE FÜR EINE REIBUNGSKUPPLUNG, INSBESONDERE FÜR KRAFTFAHRZEUGE
REACTION PLATE FOR FRICTION CLUTCH, IN PARTICULAR FOR MOTOR VEHICLES

(30) Priorité: 14.04.1994 FR 9404438
(43) Date de publication de la demande: 01.05.1996
(73) Titulaire: VALEO, 75017 Paris (FR)
(72) Inventeur: FEIGLER, Jacques, F-95350 Saint-Brice-sous-Forêt (FR); MOKDAD, Ayman, F-93400 Saint-Ouen (FR); BERTIN, Patrice, F-95540 Mery (FR)
(74) Mandataire: Gamonal, Didier
(86) Numéro de dépôt international: FR9500483
(87) Numéro de publication internationale: WO9528576

(56) Documents cités:
- DE-A- 4 118 686
- GB-A- 2 243 884

## Description

La présente invention concerne les plateaux de réaction en matière moulable pour embrayage à friction, notamment pour véhicules automobiles.

Ainsi qu'on le sait, un tel plateau de réaction, dit aussi volant moteur, offre une face de friction pour un disque de friction doté de garnitures de frottement, éventuellement fractionnées, destinées à être serrées entre ledit plateau de réaction et le plateau de pression de l'embrayage.

Ce plateau de pression est soumis à l'action de moyens élastiques à action axiale, tels qu'un diaphragme ou des ressorts à boudin, prenant appui sur un couvercle destiné à être fixé sur le plateau de réaction, éventuellement en deux parties.

Un tel plateau de réaction usuellement en fonte est visible par exemple dans le document FR-A-2 463 874 (US-A-4,362,230).

Dans ce document, le couvercle présente à sa périphérie externe un rebord radial doté de plages de fixation pour sa fixation au plateau de réaction.

Cette fixation a lieu à l'aide de vis, en sorte qu'il faut usiner la face du plateau de réaction en regard des plages de fixation du couvercle et tarauder celui-ci pour les vis de fixation.

En variante la fixation du couvercle sur le plateau de réaction peut être réalisée par sertissage tel que décrit dans le document FR-A-2 526 105 (US-A-4,600,092).

Dans ce cas il faut également usiner le plateau de réaction pour fixer le couvercle.

En outre ces plateaux de réaction sont spécifiques au couvercle auquel ils sont associés.

La présente invention a pour objet de pallier ces inconvénients, de manière simple et économique, et donc de réduire les usinages du plateau de réaction, tout en ayant la possibilité de fixer le couvercle de différentes manières.

Suivant l'invention un plateau de réaction du type sus-indiqué est caractérisé en ce qu'il comporte un insert de fixation ancré dans la masse dudit plateau de réaction en étant noyé dans celui-ci, et en ce que ledit insert présente en saillie, au voisinage de la périphérie externe du plateau de réaction, une zone de fixation pour fixation du couvercle de l'embrayage à friction.

Grâce à l'invention les usinages du plateau de réaction sont réduits considérablement, la face de friction, qu'offre le plateau de réaction au disque de friction, étant usinée comme dans l'art antérieur.

Par contre les usinages pour la fixation du couvercle sont éliminés du fait de la présence de l'insert de fixation. Aucun mouvement relatif ne peut se produire entre l'insert et le plateau de réaction du fait que l'insert est noyé dans le plateau de réaction.

Cet insert permet avantageusement une rigidification du plateau de réaction du fait qu'il est noyé dans celui-ci.

Ainsi la matière de ce plateau de réaction peut être en matière moins noble au bénéfice d'une réduction des coûts.

Il est possible, grâce à l'insert, de diminuer l'épaisseur du plateau de réaction au bénéfice d'une réduction de l'encombrement axial de l'embrayage, l'insert s'étendant avantageusement transversalement alors dans le plateau de réaction.

Lorsque le plateau de réaction présente à sa périphérie externe une jupe d'orientation axiale, il est possible de réduire la hauteur de cette jupe et donc d'augmenter avantageusement le diamètre de frottement du disque de friction.

D'une manière générale, grâce aux inserts, le plateau de réaction peut tourner à des vitesses de rotation plus élevées et/ou transmettre des couples plus importants, ce plateau ayant une meilleure tenue aux effets de la force centrifuge.

Ce plateau a également une meilleure tenue aux effets thermiques, sa mise en cône étant réduite du fait de la présence de l'insert noyé dans le plateau de réaction.

Ceci permet de réduire l'usure des garnitures du disque de friction et éventuellement de le simplifier.

Ce plateau de réaction est dépourvu de taraudage pour les vis de fixation, en sorte que les amorces de rupture sont réduites. Ainsi ce plateau de réaction est plus fiable.

En outre on obtient une fixation excellente de l'insert de fixation.

En effet, celui-ci est placé dans le moule de fabrication du plateau de réaction, et lors du moulage, par exemple par écoulement de fonte liquide dans le moule, on obtient une migration des atomes de carbone, l'insert de fixation avantageusement métallique s'échauffant alors.

Il y a ainsi en quelque sorte un soudage de l'insert de fixation noyé dans la masse du plateau de réaction. La fixation est donc ferme.

On appréciera que l'insert de fixation permet une standardisation accrue du plateau de réaction.

En effet cet insert constitue une pièce d'adaptation.

Ainsi il est possible de fixer le couvercle sur l'insert par rivetage, vissage, soudage, collage, sertissage, agrafage ou autres.

Par exemple en dotant la pièce de fixation d'un rebord transversal dirigé radialement vers l'axe de l'ensemble ou, en variante, en direction opposée à l'axe de l'ensemble il est possible de fixer par vissage ou rivetage, soudage ou autre le couvercle sur l'insert de fixation.

Dans une forme de réalisation, la zone de fixation de l'insert s'étend axialement à distance du plateau de réaction.

Ainsi il est possible de réduire l'encombrement de l'embrayage dans cette région délimitée usuellement par un carter d'embrayage, en soudant, en sertissant, ou en agrafant le couvercle sur la zone de fixation de l'insert.

Avantageusement la fixation s'effectue par soudage, éventuellement par collage, lorsque le couvercle est en matière plastique renforcée par des fibres, le couvercle présentant à sa périphérie externe un rebord d'orientation axiale destiné à coopérer à centrage avec la périphérie interne (en variante externe) de la zone de fixation de l'insert.

Ainsi on peut enfoncer plus ou moins de manière télescopique le couvercle dans l'insert et régler ainsi de manière précise l'inclinaison et/ou la charge du diaphragme, que comporte usuellement un embrayage à friction.

Dès que l'on a atteint la bonne inclinaison, ou la bonne charge on soude ou on colle le couvercle sur la zone de fixation de l'insert. On peut régler également la distance entre le diaphragme et l'extrémité libre du vilebrequin du moteur.

Ainsi on peut réduire la course de la butée de débrayage adaptée usuellement à agir en traction ou en poussée selon les cas sur l'extrémité des doigts du diaphragme.

D'une manière générale, on peut avoir des tolérances de fabrication moins précise du fait que l'on monte de manière télescopique le couvercle sur l'insert avec contact intime entre les deux pièces.

On peut ainsi se rapprocher de la courbe théorique du diaphragme.

On appréciera que l'insert de fixation permet de simplifier le couvercle.

En effet, le couvercle peut être plus plat que dans l'art antérieur, puisque l'insert de fixation est une pièce d'adaptation favorisant la standardisation du couvercle.

Ainsi ce couvercle peut avoir une forme plate à sa périphérie externe et présenter à sa périphérie interne des moyens d'assemblage pour montage pivotant du diaphragme au couvercle. L'outillage de fabrication du couvercle est ainsi simplifié.

L'insert de fixation peut présenter dans sa partie saillante des trous pour ventilation de l'embrayage. Cet insert peut également présenter des ouvertures pour montage du plateau de pression de l'embrayage doté alors de pattes destinées à coopérer de manière complémentaire avec lesdites ouvertures.

Ce plateau de pression est ainsi lié en rotation à l'insert tout en étant monté mobile axialement par rapport à celui-ci.

Cet insert facilite donc la mise en place d'un embrayage du type bidisque.

Lorsque le plateau de réaction présente à sa périphérie externe une jupe, ledit insert s'étend à l'intérieur de ladite jupe.

Bien entendu ledit insert peut également s'étendre dans la partie transversale du plateau de réaction. Toutes les combinaisons sont donc possible.

Avantageusement l'insert est doté de trous, de forme circulaire, oblongue ou ovoïde pour son ancrage dans le plateau de réaction. La forme des trous dépend des applications et notamment des contraintes.

Ainsi on obtient une fixation et un enracinement encore plus ferme de l'insert, avec possibilité de transmettre des couples plus importants, car la matière du plateau de réaction remplit les trous. La rigidification du plateau de réaction est donc encore accrue, avec un meilleur soudage de l'insert sans augmentation de l'épaisseur du plateau de réaction.

Bien entendu on peut remplacer les trous par des évidements pratiqués dans les bords de l'insert.

En variante l'insert peut être doté d'embouties, la matière du plateau de réaction pénétrant dans le creux des emboutis.

De préférence les emboutis sont formés de deux groupes, l'un des groupes étant dirigé dans un sens et l'autre groupe dans l'autre sens.

En variante on peut remplacer les emboutis alternés précités par des crevés alternés.

Bien entendu toutes les combinaisons sont possibles, l'insert présentant par exemple des trous et des emboutis.

Dans tous les cas, l'insert présente des déformations débouchantes ou non pour son meilleur ancrage dans le plateau de réaction. Ces déformations appartiennent donc à des moyens d'accrochage.

Grâce à l'insert il est possible d'implanter un dispositif de frottement à la périphérie externe du plateau de réaction.

En variante on peut fixer la couronne de démarreur sur l'insert.

La description qui va suivre illustre l'invention en regard des dessins annexés dans lesquels :
- la figure 1 est une vue en coupe axiale d'un embrayage à friction équipé d'un plateau de réaction selon l'invention et ce selon la ligne 1-1 de la figure 2 ;
- la figure 2 est une vue de face de l'embrayage à friction sans ses plateaux de réaction et de pression et son disque de friction avec arrachement local ;
- la figure 3 est une vue en coupe selon la ligne 3-3 de la figure 2 ;
- la figure 4 est une vue partielle en coupe d'un embrayage à friction pour un second exemple de réalisation ;
- la figure 5 est une vue analogue à la figure 4 pour un troisième exemple de réalisation ;
- la figure 6 est une vue partielle selon la flèche 6 de la figure 5 ;
- la figure 7 est une vue analogue à la figure 6 pour encore un quatrième exemple de réalisation ;
- la figure 8 est une vue partielle en coupe axiale pour un cinquième exemple de réalisation ;
- la figure 9 est une vue analogue à la figure 4 pour un sixième exemple de réalisation ;
- la figure 10 est une vue partielle montrant une patte d'agrafage ;
- la figure 11 est une vue analogue à la figure 4 pour un septième exemple de réalisation.

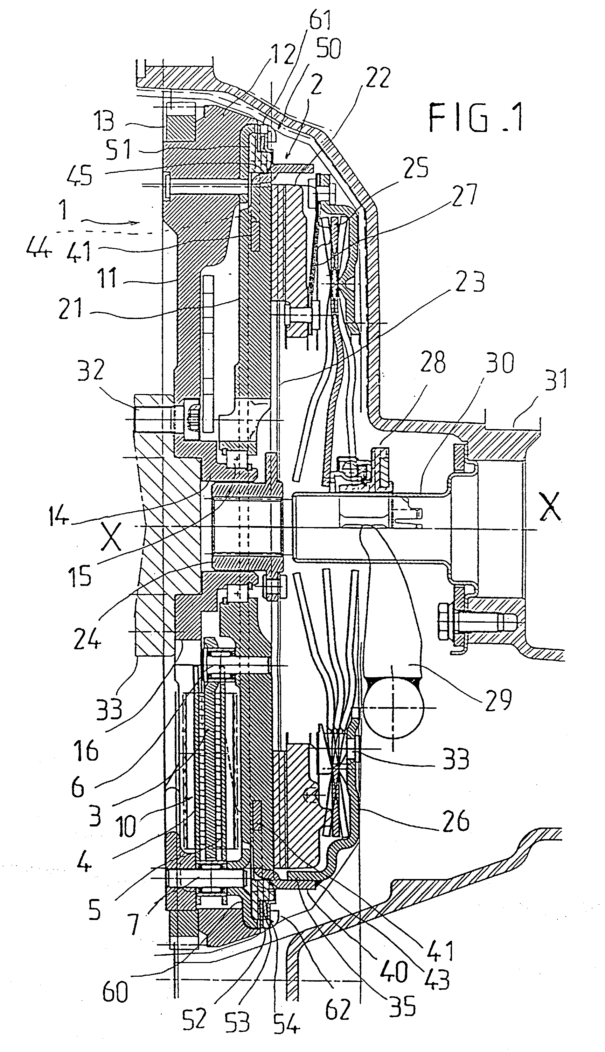

Dans les figures 1 à 3 est illustré un dispositif amortisseur de torsion comportant deux parties coaxiales 1,2 montées mobiles l'une par rapport à l'autre à l'encontre de moyens élastiques 8 appartenant à un dispositif élastique d'amortissement.

Ce dispositif appartient à un volant amortisseur pour véhicule automobile.

La première partie 1 consiste en un plateau 11 et la seconde partie 2 consiste également en un plateau 21 s'étendant parallèlement au plateau 11. Les plateaux 11 et 21 sont en matière moulable, usuellement en fonte, pour augmenter leur inertie. En variante ils peuvent être à base d'aluminium, le choix de la matière dépendant des applications.

En règle générale, de manière connue en soi, le métal en fusion est versé dans un moule.

Les deux parties 1,2 consistent donc en des masses tournantes l'une par rapport à l'autre autour de l'axe de symétrie axial X-X de l'embrayage.

La seconde masse 2 est montée à rotation sur un moyeu tubulaire 14 porté par la première masse 11. Ici le moyeu 14 est d'un seul tenant avec le plateau 11, en variante il peut être rapporté sur celui-ci, et un palier 15, ici un roulement à billes en variante un palier lisse, est interposé entre la périphérie externe du moyeu 14 et la périphérie interne du plateau 21.

La seconde masse 2, montée tournante sur la masse 1 par l'intermédiaire du palier 15, constitue le plateau de réaction d'un embrayage à friction comportant, de manière connue en soi, un plateau de pression 22, un diaphragme 25 et un couvercle 26.

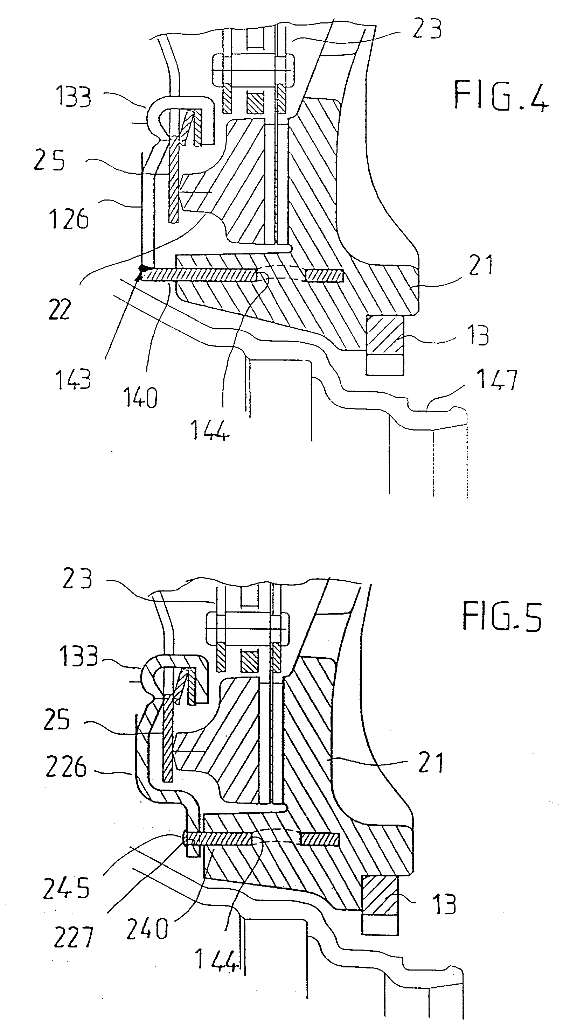

Par rapport à une solution classique (voir figures 4,5,9), avec un volant moteur formant le plateau de réaction de l'embrayage, on divise ici le volant en deux parties comme explicité ci-après.

Suivant l'invention un plateau de réaction 21 en matière moulable du type sus-indiqué est caractérisé en ce qu'il comporte un insert de fixation 40,41 ancré dans la masse dudit plateau 21 en étant noyé dans celui-ci, et en ce que ledit insert 40,41 présente en saillie, au voisinage de la périphérie externe du plateau de réaction 21, une zone de fixation 40 pour fixation du couvercle 26 de l'embrayage à friction.

Ici le plateau de pression 22, usuellement en fonte, est lié en rotation au couvercle 26 avec mobilité axiale, de manière connue en soi, par l'intermédiaire de languettes élastiques inclinées 27 fixées chacune à l'une de leur extrémité au couvercle 26 et à l'autre de leur extrémité à une patte du plateau de pression 22.

La fixation est réalisée ici par rivetage.

Le diaphragme 25 est monté de manière basculante sur le couvercle 26 ici par l'intermédiaire de colonnettes 33, dont l'une est visible dans la partie basse de la figure 1. Cette colonnette présente une tête pour appui du diaphragme en regard d'un embouti formé dans le fond du couvercle.

Pour plus de précisions on se reportera au document FR-A-1 524 350 (US-A-3,499,512).

En variante on peut utiliser une articulation avec deux joncs portés par les colonnettes ou des dispositions avec des rondelles portées par des pattes issues du couvercle par pliage et découpe comme visible dans les figures 4,5 et 9 décrites ci-après.

Le diaphragme 25 prend appui sur le fond du couvercle 26 pour solliciter le plateau de pression 22 en direction du plateau de réaction 21. L'embrayage à friction comporte également un disque de friction 23, qui est relié à un moyeu central 24 calé en rotation sur l'arbre d'entrée de la boîte vitesses (non visible) par un montage à cannelures.

Pour mémoire on rappellera que l'ensemble des pièces 26,25,24,27 forme un mécanisme d'embrayage unitaire fixé par son couvercle 26, de forme creuse, sur le plateau de réaction 21 grâce aux inserts 40,41 selon l'invention.

Normalement les garnitures de frottement, que présente le disque 23 à sa périphérie externe, sont serrées sous l'action du diaphragme entre les plateaux 21,22 en sorte que l'embrayage est normalement engagé.

Pour débrayer, l'embrayage étant ici du type poussé, il faut agir en poussant sur les extrémités des doigts du diaphragme 25 à l'aide d'une butée de débrayage 28 pour désengager l'embrayage.

Pour ce faire la butée 28 est montée mobile axialement le long d'un tube-guide 30 solidaire de la boîte de vitesses 31 et traversé par l'arbre d'entrée de celle-ci.

Cette butée 28 est commandée par une fourchette de débrayage 29 permettant son déplacement axial vers la gauche de la figure 1 entraînant ainsi un basculement du diaphragme dont plusieurs positions sont représentées à la figure 1.

La première masse tournante 11 est prévue pour être reliée, ici par des vis 32, par sa périphérie interne à un arbre menant, ici au vilebrequin 34 du moteur à combustion interne du véhicule automobile, tandis que la seconde masse tournante 2 est liée en rotation par l'intermédiaire du mécanisme d'embrayage 22,25,26,27 et du disque 23 à un arbre mené ici l'arbre d'entrée de la boite de vitesses du véhicule.

La première masse 1, formant plateau, est constituée dans l'essentiel par une partie centrale 11, d'orientation transversale, en forme de plaque ou de flasque, qui se prolonge d'un seul tenant à sa périphérie externe par une jupe cylindrique d'orientation axiale 12.

Cette masse 1 porte à sa périphérie externe une couronne de démarrage 13 prévue pour être entraînée par le pignon d'un démarreur (non représenté).

La partie interne de la masse 1 est dotée d'une pluralité de trous pour passage des vis de fixation 32 de la masse 1 au vilebrequin 34.

On notera que le plateau de réaction 21 présente des trous en correspondance permettant le passage d'un outil pour le vissage des vis 32 et que le palier 15 est de taille réduite en étant implanté en dessous desdits trous.

Ici l'insert 40,41 est métallique en étant en tôle emboutie.

Cet insert comporte une partie transversale 41 noyée et donc enracinée de manière ferme dans la partie principale transversale du plateau de réaction 21.

Cette partie 41 est dotée d'une pluralité de trous 44 pour parfaire l'enracinement.

A sa périphérie externe cette partie transversale 41 est prolongée, en direction du fond du couvercle 26, par une partie cylindrique 40 d'orientation axiale, éventuellement fractionnée en pattes, qui forme la zone de fixation selon l'invention. La partie 40 s'étend en saillie axiale par rapport à la face de friction du plateau de réaction en s'étendant radialement au-delà de la périphérie externe du plateau 21 (au voisinage de celle-ci) et donc à distance des garnitures de frottement du disque 23 et du plateau de pression 22 qu'elles entourent. La face de friction, qu'offre le plateau 21 aux garnitures de frottement du disque 23, peut donc s'étendre jusqu'à la tranche externe du plateau 21. Le couvercle 26 présente à sa périphérie externe un rebord d'orientation axiale 35 ici fractionné pour faciliter le montage.

Ce rebord est cylindrique et est propre à coopérer à glissement avec la périphérie interne de la partie 40 formant centreur. Le rebord 35 est donc en contact intime avec la partie 40.

Le rebord 35 est ainsi interposé entre la partie 40 et la périphérie externe du plateau de pression 22.

Il est donc possible d'engager plus ou moins le couvercle 26, ici en tôle emboutie, dans la partie 40.

Bien entendu on peut inverser les structures, le rebord entourant alors la partie 40 en coopérant avec la périphérie externe de celle-ci. Dans tous les cas, la partie 40 forme un organe de guidage et de centrage pour le rebord 35 et donc pour le couvercle 26.

Ainsi on peut contrôler de manière précise l'inclinaison et/ou la charge du diaphragme 25 et ce par rapport à une référence en l'occurrence le vilebrequin 34 du moteur du véhicule.

Dès que le diaphragme a atteint l'inclinaison ou la charge souhaitée, on procède alors à une fixation du couvercle ici sur l'extrémité libre de la zone de fixation 40 de l'insert, ici par soudage, avec formation d'un cordon 43.

Lorsque le rebord 35 entoure la partie 40, le soudage est réalisé au niveau de l'extrémité libre du rebord.

Ici les moyens élastiques 8 du dispositif élastique d'amortissement comportent au moins un organe élastique 8 et interviennent globalement radialement entre les plateaux 11 et 21.

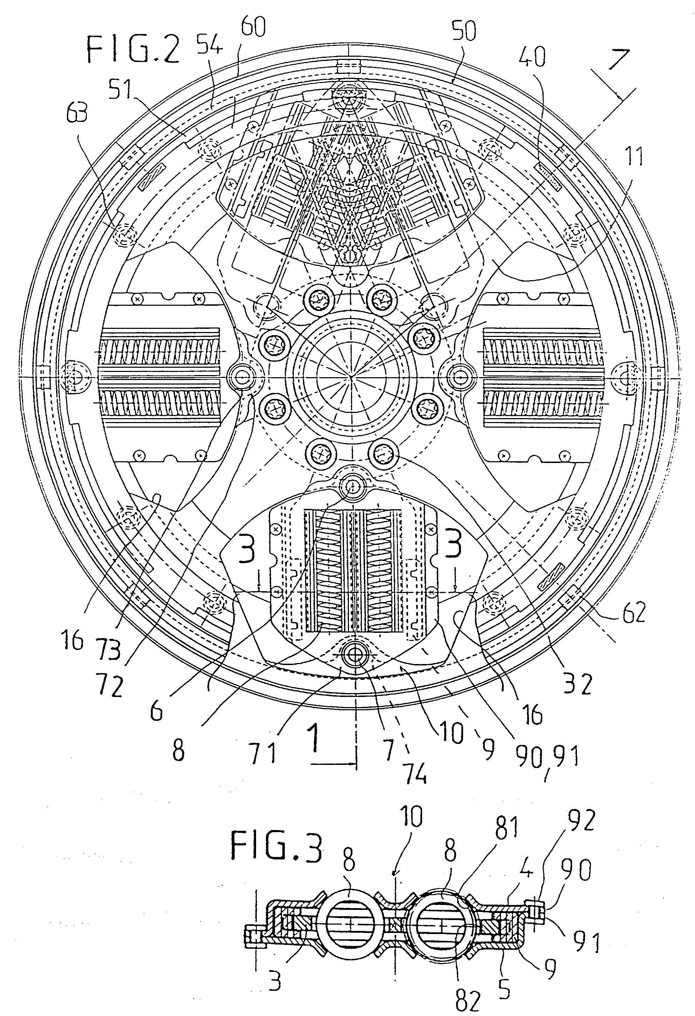

Ici des organes élastiques sont montés dans au moins une cassette 10 articulée (figures 2 et 3) comportant, d'une part, un voile 3 doté de premiers logements 82 pour montage des organes élastiques 8 et, d'autre part, deux pièces de guidage 4,5 disposées de part et d'autre dudit voile et présentant, en regard des premiers logements 82, des seconds logements 81 pour montage desdits organes élastiques 8, consistant ici en deux ressorts à boudin, éventuellement montés par paire dans les logements 81,82 parallèles entre eux.

Bien entendu en variante on peut prévoir un seul ressort par cassette et donc une seule paire de logements 81 et un seul logement 82.

Les pièces de guidage 4,5 sont fixées latéralement l'une à l'autre. Le voile 3 et les pièces de guidage 4,5 sont montés tête-bêche, ledit voile présentant à l'une de ses périphéries externe et interne une première probutérance 72 pour montage de premiers moyens d'articulation 6 sur une première desdites masses 11,12, tandis que les pièces de guidage 4,5 présentent à l'une de leur périphérie externe et interne une seconde protubérance 71, en regard l'une de l'autre, pour montage de seconds moyens d'articulation 7, sur l'autre desdites masses.

Lesdites seconde 71 et première protubérances 72 sont décalées radialement l'une par rapport à l'autre, tout comme les moyens d'articulation 6,7.

Ici les premier 82 et second logements 81 consistent en des fenêtres d'orientation radiale, les second logements 81 présentant des lèvres.

En variante le premier logement peut consister en une échancrure d'orientation radiale ouverte radialement du côté opposé à la première protubérance.

En variante les second logements 81 peuvent consister en des emboutis.

Quoi qu'il en soit, les pièces de guidage 4,5 présentent à leur périphérie externe des rebords accolés 90,91 pour leur fixation mutuelle ici à l'aide de rivets 92.

Ces pièces de guidage 4,5 sont donc fixées latéralement l'une à l'autre par rivetage.

En variante elles peuvent être fixées l'une à l'autre à la faveur de leurs rebords par soudage ou agrafage.

Ici deux ressorts 8 sont montés parallèlement l'un à l'autre à l'intérieur de ladite cassette et le voile 3 est monté à articulation à sa périphérie interne sur le plateau 21 tandis que les pièces de guidage 4,5 sont montées à articulation à leur périphérie externe sur le plateau 11. Les pièces 4,5 présentent chacune au niveau de la protubérance 72 un évidement 73, ici semi-circulaire, pour passage d'un axe 6, décrit ci-après, ce qui permet d'allonger les ressorts 8.

Il en est de même du voile 3, qui présente au niveau de la protubérance 71 un évidement 74, ici semi-circulaire, pour passage d'un axe 7 décrit ci-après.

Les ressorts 8 ont donc une longueur maximale.

Plus précisément le voile 3 est monté à articulation sur le plateau 21 (à la périphérie interne de celui-ci) à l'aide d'un axe 6 à tête épaulée fixé, ici par emmanchement à force, sur le plateau 21 et entouré par un palier à aiguilles interposé entre ledit axe et une douille fixée sur le voile 3.

En variante on peut utiliser un palier lisse.

Cette douille s'étend axialement entre les plateaux 11 et 21 en étant fixée ici par soudage sur le voile 3.

A leur périphérie externe les pièces 4,5 sont montées à articulation sur le plateau 11 à l'aide d'un axe 7 emmanché à force dans le plateau 11 et dans une pièce 60 et ce à la périphérie externe du plateau 21.

L'axe 7 est entouré par un roulement à aiguilles interposé entre ledit axe et un manchon solidaire des pièces de guidage 3,4, ici par soudage.

Le manchon et le roulement à aiguilles sont interposés axialement entre le plateau 11 et la pièce 60 présentant une cheminée pour réception de l'axe 7.

En variante le manchon peut être rapporté par sertissage sur les pièces 4,5. Pour ce faire le manchon présente une partie centrale de plus grand diamètre s'étendant entre les deux pièces 4,5 et offrant à celles-ci un épaulement. Les extrémités du manchon sont rabattues pour sa fixation par sertissage aux pièces 4,5.

Le plateau 11 est évidé en 16 en regard d'une cassette 10.

Ici quatre cassettes articulées 10 et quatre axes 6,7, régulièrement répartis sont prévus comme illustré à la figure 2. Bien entendu ce nombre dépend des applications.

La pièce 60 est fixée par rivetage à la périphérie externe du plateau 11, plus précisément sur la partie 12 de celui-ci.

Cette pièce 60, ici en tôle, permet donc de rigidifier le plateau 11 ajouré par les ouvertures 16, dont les bords internes sont en forme d'arc de cercle.

A sa périphérie externe la pièce 60 présente un rebord d'orientation axiale avec des échancrures 61 formant des mortaises et des pattes 62 à son extrémité libre. Les pattes 62 sont rabattues radialement vers l'axe de l'ensemble.

La pièce 60 a donc une forme de peigne avant pliage des pattes 62.

Entre la périphérie externe de la partie transversale de la pièce 60 et les pattes 62, on trouve successivement axialement une rondelle de frottement 51, une rondelle d'application 52, une rondelle élastique à action axiale 53, ici une rondelle Belleville en variante une rondelle ondulée, et enfin une pièce d'appui 54 au contact avec les pattes 62.

La rondelle d'application 52 présente à sa périphérie externe des pattes, formant des tenons, engagées dans les échancrures 61 de la pièce 60. La rondelle 52 est ainsi liée en rotation, éventuellement avec jeu, avec la pièce 60 par une liaison du type tenons-mortaises.

La pièce 51 est en matériau de frottement, ici en matière plastique, et a globalement en section la forme d'un L inversé.

Localement à sa périphérie interne la pièce 51 présente des bossages 63 engagés, avec ou sans jeu circonférentiel, dans des emboutis 45 locaux pratiqués dans la zone de raccordement de la zone de fixation 40 avec la zone 41 d'enracinement de l'insert de fixation 40,41.

Les emboutis 45 sont dirigés vers l'axe de l'ensemble en étant au contact de la périphérie externe du plateau de réaction 2. Pour cette raison les bossages 63 sont chanfreinés.

Ainsi, grâce à l'insert de fixation 40,41, il est créé un dispositif d'hystérésis 50 intervenant entre les pièces 40,41 - 60, ledit dispositif comprenant, d'une part, les rondelles 52,53,54 calées en rotation par l'intermédiaire de la pièce 52 sur la pièce 60, et d'autre part, la pièce de frottement 51 calée en rotation, éventuellement à jeu, sur la pièce 40 et donc sur le plateau 21. Le dispositif 50 forme donc un dispositif de frottement intervenant entre les deux masses 1,2, tout en utilisant au mieux l'espace disponible sans interférence avec le carter de l'embrayage.

Ainsi lors du mouvement relatif entre les deux masses 1,2, les ressorts 8, et donc les cassettes 10 s'inclinent comme représenté dans la partie haute de la figure 2 avec un mouvement relatif entre les pièces 51 et 60. Les ressorts 8 sont comprimés lors de ce mouvement relatif.

Les deux masses 1,2 concentriques sont donc montées mobiles l'une par rapport à l'autre à l'encontre de moyens élastiques 8 à action radiale et de moyens de frottement 50 à action axiale.

On notera également que deux patins de frottement 9 interviennent entre les bords latéraux du voile 3 et les bords latéraux des pièces de guidage 4,5.

Ces patins 9 comportent des bossages engagés dans des échancrures pratiquées dans les bords latéraux du voile 3. Les patins 9 coiffent la tranche du voile 3.

Ainsi un frottement supplémentaire intervient lors du mouvement relatif entre les deux masses 1,2, les patins guidant le voile 3 lors de son mouvement relatif par rapport aux pièces 4,5. Tout risque de coincement est ainsi évité.

On notera que l'insert 40,41 présente donc une zone d'enracinement 41, d'orientation transversale, noyée dans le plateau 21 et une zone de fixation 40, d'orientation axiale, permettant la création d'un dispositif de frottement ainsi que la fixation, ici de manière réglable du couvercle 26.

Bien entendu le volant moteur peut être en une seule partie. Ainsi à la figure 4, le plateau de réaction 21 est destiné à être fixé directement sur le vilebrequin du moteur.

Ce plateau 21 porte alors la couronne de démarrage 13.

Dans cette figure 4, le disque 23 est du type élastique et comporte, de manière connue en soi, et tel que visible à la figure 1 du document FR-A-2 463 874, deux rondelles de guidage disposées de part et d'autre d'un voile solidaire du moyeu 24.

Des moyens élastiques à action circonférentielle (non visibles) interviennent entre le voile et les deux rondelles de guidage pour leur accouplement élastique.

Les rondelles de guidage sont reliées ensemble par les colonnettes traversant des ouvertures pratiquées à cet effet dans le voile.

Les moyens élastiques, en pratique des ressorts à boudin, sont montés dans des fenêtres en vis-à-vis pratiquées dans le voile et les rondelles de guidage.

Les colonnettes permettent l'assemblage du disque portant les garnitures de frottement avec les rondelles de guidage.

Ces garnitures de frottement sont destinées à être serrées entre le plateau de pression 22 et le plateau de réaction 21.

Le diaphragme 25, comme à la figure 1, s'appuie à la périphérie externe de sa rondelle Belleville sur un bossage saillant axialement du plateau de pression 22, tandis qu'à la périphérie interne de sa rondelle Belleville, il est monté entre un appui primaire et un appui secondaire.

Ces appuis appartiennent aux moyens 133 assujettissant de manière pivotante le diaphragme au couvercle 126.

Ces moyens 133 comportent des pattes, ici issues d'un seul tenant par pliage et découpe du couvercle 126. Ces pattes traversent des orifices, que présente le diaphragme à la racine de ses doigts, et ont une extrémité repliée radialement en direction opposée de l'axe de l'ensemble.

Une rondelle de forme tronconique et une rondelle d'application sont interposées entre l'extrémité repliée desdites pattes et ledit diaphragme.

La rondelle tronconique offre un appui secondaire pour le diaphragme 25 en regard d'un appui primaire formé par emboutissage dans le couvercle 126.

Grâce à l'insert selon l'invention le couvercle 126 peut avoir une forme simple et se réduire à une plaque annulaire présentant à sa périphérie interne les moyens d'assemblage 133.

Cette plaque 126 ici métallique, est fixée, ici par un cordon de soudage 143 à la zone de fixation 140 de l'insert métallique.

Le couvercle est fixé à l'extrémité libre de la zone de fixation 140.

Comme précédemment on peut régler de manière précise l'inclinaison et/ou la charge du diaphragme 25 en faisant pénétrer plus ou moins le couvercle 126 dans la zone 140 en forme de couronne.

Ici l'insert est d'orientation axiale et a une forme tubulaire. Il est enraciné dans la jupe annulaire, que présente le plateau de réaction 21 à sa périphérie externe.

L'insert 140 présente des trous 144 pour son ancrage fermé dans le plateau 21.

Ces trous sont remplis par la matière du plateau 121 et ont ici une forme oblongue, en variante circulaire.

Ainsi l'insert présente une zone d'enracinement noyée dans la masse du plateau 21, radialement au-dessus de la face de friction qu'offre le plateau de pression 1 au disque de friction 23, et une zone saillante axialement 141 à la périphérie externe du plateau 21. Cette zone s'étend en direction du couvercle.

Eventuellement on peut fractionner en pattes la zone 141.

On notera que l'encombrement est réduit à cet endroit. En effet on voit partiellement dans la partie basse de la figure 4 le carter 147 de l'embrayage. Ce carter est très proche de l'extrémité libre de la jupe du plateau 21, en sorte qu'il est difficile de fixer à cet endroit le couvercle par vissage sur la jupe, les vis risqueraient alors d'interférer avec ledit carter.

Grâce au soudage selon l'invention on peut fixer le couvercle et ce avec un encombrement réduit.

Bien entendu le couvercle peut être doté à sa périphérie externe d'un rebord radial de fixation.

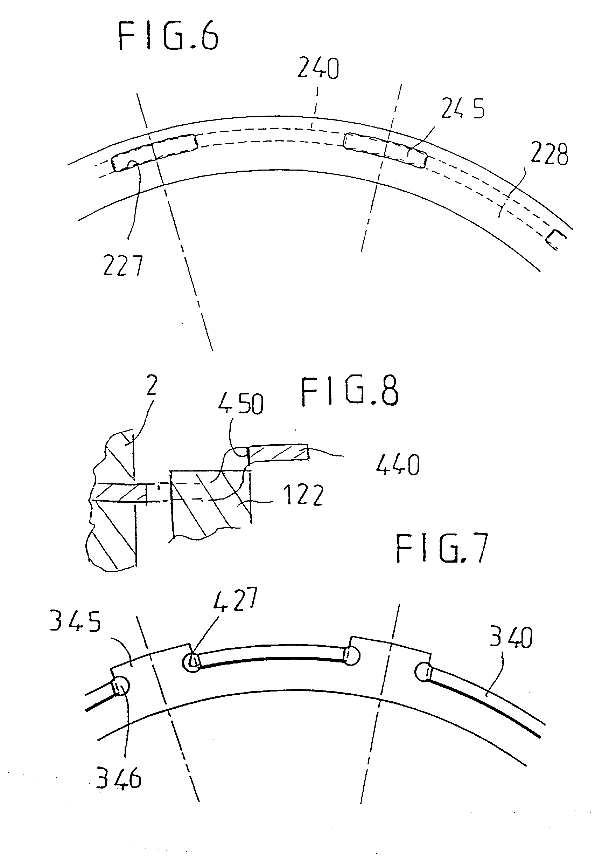

Ainsi dans les figures 5 et 6 le couvercle 226 présente des trous 227 à sa périphérie externe.

Ces trous sont destinés à être traversés par des pattes épaulées 245 appartenant à l'extrémité libre de la zone de fixation de l'insert 240 métallique noyé dans la masse de la jupe du plateau 21 comme à la figure 4.

Ainsi le rebord radial de fixation du couvercle vient en appui contre l'épaulement, que présente les pattes 245.

Ici l'épaulement est formé par l'extrémité libre de l'insert 240, les pattes 245 s'étendent axialement en saillie par rapport à ladite extrémité libre. Bien entendu les pattes 245 peuvent être moins large à leur extrémité libre qu'à leur zone d'enracinement à l'insert pour formation d'épaulements.

L'extrémité libre des pattes 245 est destinée, après traversée des trous 227, à être écrasée pour assemblage du couvercle avec la zone 240.

Ainsi le couvercle 226 est fixé par sertissage à l'insert de fixation 240.

Bien entendu on peut inverser le-s structures.

Ainsi à la figure 7 le couvercle présente à sa périphérie externe des pattes 345 d'orientation transversale engagées dans des ouvertures débouchantes 427, que présente la zone de fixation 340 de l'insert métallique à son extrémité libre.

Après enfilage des pattes 345 dans les ouvertures 427 on procède à un écrasement de matière des bords latéraux de l'ouverture 427 conduisant à une fixation par sertissage du couvercle à l'insert 340, lesdits bords fluant en 346.

Bien entendu l'insert 440 peut avoir une extrémité libre décalée radialement vers l'extérieur par rapport à la partie principale de sa zone de fixation.

Ce décalage est formé à la faveur d'une zone de raccordement de forme arrondie.

Compte tenu de ce décalage il est possible (figure 8) de pratiquer des ouvertures 450 affectant l'extrémité libre de la zone de fixation 440, ainsi que la partie principale de la zone 440.

Ainsi le plateau de pression 22 peut présenter à sa périphérie externe des pattes 122 d'orientation radiale s'engageant à la manière de tenons dans les ouvertures 450 formant mortaises. Ces pattes 122 passent sous l'extrémité libre de la portion 440.

Bien entendu le couvercle est alors fixé à l'extrémité libre de la zone 440 comme à la figure 7, ou en variante par soudage .

Ainsi grâce à l'invention le plateau de pression 22 peut être lié en rotation au plateau de réaction 21 en étant monté mobile axialement par rapport à celui-ci.

Ainsi grâce à l'invention il est possible de supprimer les languettes 27 de la figure 1.

Bien entendu on peut conserver les languettes 27 de la figure 1 et en profiter pour monter un embrayage bidisque à la faveur de l'insert 440.

Cet embrayage comporte alors deux disques de friction et deux plateaux de pression, dont l'un est lié en rotation avec mobilité axiale par les tenons 122, tandis que l'autre plateau est lié en rotation au couvercle par les languettes tangentielles.

On voit en se reportant au document FR-A-2 628 492 (US-A-4,892,177) que la disposition selon l'invention permet de créer de manière aisée un embrayage bidisque à l'aide des inserts selon l'invention.

Bien entendu la zone de fixation, d'orientation axiale de l'insert métallique, peut être dotée de trous pour la ventilation de l'embrayage.

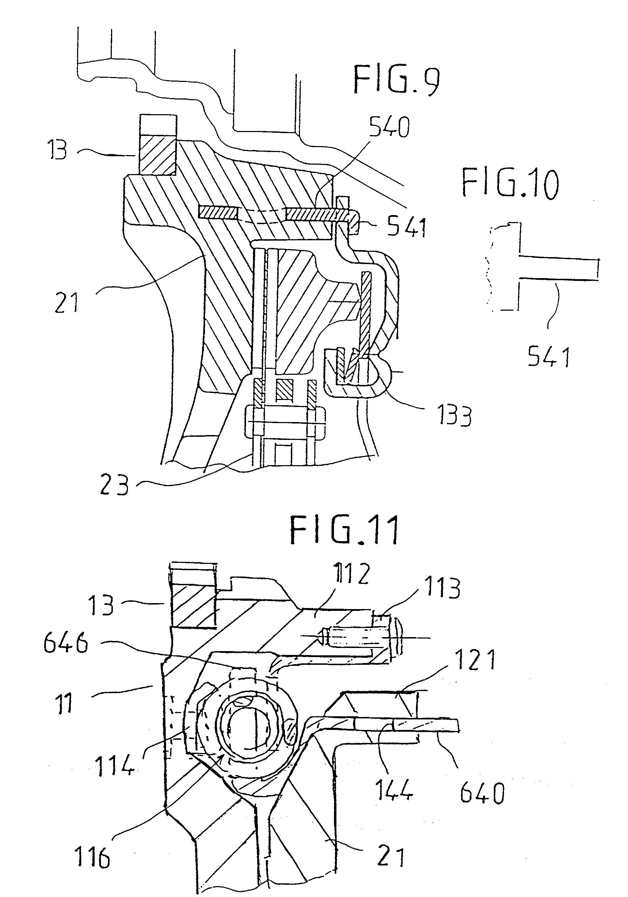

Bien entendu le couvercle peut être fixé par agrafage aux inserts 540 (figure 9). Dans ce cas les inserts 540 métalliques présentent à leurs extrémités libres des pattes épaulées 541 traversant de manière complémentaire une ouverture associée pratiquée dans le rebord du couvercle. Après traversée des ouvertures, les pattes sont rabattues vers l'axe de l'ensemble, ou en variante en direction opposée à l'axe de l'ensemble.

Bien entendu à la figure 1 les deux masses peuvent être montées mobiles l'une par rapport à l'autre, à l'encontre d'organes élastiques à action circonférentielle.

Ainsi à la figure 11, l'insert 640 ancré dans la jupe périphérique 121 du plateau de réaction 121 à l'aide de trous 144, comme dans les figures 4 et 5, est prolongé sur la face opposée du plateau de réaction, c'est-à-dire en direction du plateau 11.

L'insert métallique épouse la forme du plateau de réaction 21 rétréci et incliné à cet endroit. Il rigidifie le plateau 22.

L'extrémité libre de cet insert est pliée radialement vers l'extérieur pour formation de pattes radiales 646 offrant un appui aux extrémités circonférentielles des organes élastiques 116 à action circonférentielle montés par paire.

Ces ressorts 116, ici sous forme de ressorts à boudin précourbés montés par paire, prennent appui également sur des pièces 114 solidaires du plateau 11. Plus précisément ce plateau 11 présente de place en place des pièces d'appui 114 fixées par rivetage au plateau 11 ainsi que des pièces d'appui 113 fixées ici par vissage à l'extrémité libre de la jupe 112, que présente le plateau à sa périphérie externe.

Ici ce plateau 11 entoure globalement le plateau de réaction 21. Ce plateau 11 est évidé pour montage des ressorts 116 et des pièces 114,113, ainsi que de l'insert 140. Le double volant est donc d'encombrement axial réduit.

Il est possible de créer une chambre étanche, remplie par exemple de graisse et contenant les ressorts 116 à action circonférentielle. Il suffit de prévoir un joint entre la jupe 121 et la pièce 113, ainsi qu'entre les plateaux 11, 21 radialement en-dessous des ressorts ainsi lubrifié pour réduction des usures.

Bien entendu toutes les combinaisons sont possibles. Ainsi l'insert à la figure 4 peut être prolongé par une partie transversale s'étendant dans la partie transversale du plateau de réaction 21.

Le couvercle 126 peut être monté par agrafage ou sertissage sur les inserts, respectivement 240,540.

Ainsi qu'on l'aura compris et qu'il ressort à l'évidence de la description, il est possible de prolonger la zone de fixation de l'insert radialement vers l'intérieur ou vers l'axe extérieur pour formation d'une partie transversale permettant la fixation du couvercle par vissage, rivetage, soudage ou autres.

Avec un insert à rebord transversal, on peut donc monter des couvercles et des plateaux de pression de taille différente sur un même plateau de réaction.

Bien entendu l'embrayage peut être du type tiré comme décrit dans le document FR-A-2 463 874 (US-A-4,362,230).

Le couvercle peut être en matière plastique renforcée par des fibres, par exemple de verre.

En variante, à la figure 1, la partie 40 peut s'étendre au contact de la périphérie externe du plateau 21, le rebord 35 entourant alors la partie 40 de manière précitée. Il devient alors possible de fixer la couronne de démarreur 13 sur la partie 40, notamment lorsque le plateau de réaction est fixé directement sur le vilebrequin 34. Dans tous les cas (figure 1 et variante) la face de friction du plateau de réaction peut s'étendre jusqu'à la tranche externe du plateau de réaction. Il en est de même des garnitures de frottement du disque de friction.

En variante les colonnettes 33 et le diaphragme 25 peuvent être montés à l'extérieur du couvercle comme à la figure 4 du document FR-A-1 524 350.

Dans ce cas les bossages, qu'offre le plateau de pression 22 pour l'appui du diaphragme 25, traversent le couvercle fixé par exemple comme à la figure 7 par soudage sur l'insert.

On appréciera que le roulement 15 est de taille réduite et qu'il s'étend en-dessous des vis 32 ce qui permet d'allonger les ressorts 8 et donc les cassettes 10.

Dans les figures illustrées, pour la position de repos du volant amortisseur, les cassettes 10 s'étendent radialement, les moyens d'articulation 6,7 étant alors alignés sur un même axe.

En variante pour ladite position de repos, les cassettes 10 peuvent être légèrement inclinées, les moyens d'articulation 6,7 étant alors décalés circonférentiellement.

Bien entendu on peut inverser les structures, les pièces 4,5 étant articulées à leur périphérie interne sur le plateau de réaction 21, tandis que le voile 3 est alors articulé à sa périphérie externe sur le plateau 11 avec intervention de la pièce 60.

Les trous fermés 44,144 peuvent être remplacés par des emboutis ou des crevés, ou des pattes, de préférence alternés.

Par exemple, à la figure 1, la partie d'enracinement 41 présenterait alors avantageusement une première série d'embouties dirigés vers le plateau 11, et une seconde série d'embouties dirigés axialement vers le plateau 22. Bien entendu on peut également prévoir des trous.

A la figure 4, les emboutis seraient dirigés radialement vers l'axe et radialement en direction opposée à l'axe.

Les trous peuvent être remplacés par des évidements ouverts affectant les bords de l'insert.

Dans tous les cas, l'insert est doté de déformations, soient débouchantes (les trous, les évidements, les crevés, les pattes), soient non débouchantes (les emboutis), soient les deux à la fois pour un accroissement de son ancrage dans la masse du plateau de réaction.

On notera que dans les figures 4,5,9 les trous sont pratiqués dans une zone emboutie. Bien entendu l'insert peut porter des pions ou autres rapportés par exemple par sertissage sur celui-ci. Ainsi un meilleur ancrage est obtenu. L'insert porte donc avantageusement des moyens d'accrochage sous forme de déformations, pions etc.

Ainsi qu'on l'aura compris les ouvertures 16 permettent d'éviter toute interférence entre les cassettes 10 et le plateau 11.

Ces ouvertures 16 sont donc des ouvertures de dégagement permettant de réduire l'encombrement axial du volant amortisseur, ainsi que de favoriser une ventilation.

Enfin l'insert peut être éventuellement fractionné. Mais avantageusement il comporte une partie annulaire continue.

Bien entendu il est possible, par exemple à la figure 1, de fractionner en pattes la périphérie interne de la partie transversale.

De même dans les figures 4,5,9 les extrémités des inserts peuvent être fractionnées en pattes.

Dans les figures illustrées le couvercle est en tôle emboutie. Bien entendu, ce couvercle peut être, en variante, en matière moulable, par exemple en fonte ou à base d'aluminium, ou en matière plastique renforcée par des fibres. La zone de fixation de l'insert peut être longue axialement et être mise à la longueur en fonction des applications.

## Revendications

1. Plateau de réaction en matière moulable pour embrayage à friction doté d'un couvercle (26,126,226), notamment pour véhicules automobiles, caractérisé en ce qu'il comporte un insert de fixation (40,41-140-240-340-440-540-640) ancré dans la masse dudit plateau de réaction (21) en étant noyé dans celui-ci, et en ce que ledit insert présente en saillie, au voisinage de la périphérie externe du plateau de réaction 21, une zone de fixation (40,140,240,340,440,540,640) pour fixation du couvercle (26) de l'embrayage à friction.

2. Plateau selon la revendication 1, caractérisé en ce que l'insert (40,41-140-240-340-440-540-640) présente des moyens d'accrochage (44,144) pour accroître son ancrage dans le plateau de réaction (21).

3. Plateau selon la revendication 2, caractérisé en ce que l'insert (40,41-140-240-340-440-540-640) présente des trous (144) pour son ancrage dans le plateau de réaction (21).

4. Plateau selon l'une quelconque des revendications prècèdentes, caractérisé en ce que l'insert (40,41-140-240-340-440-540-640) comporte une zone d'enracinement s'étendant transversalement dans la partie principale transversale du plateau de réaction (21).

5. Plateau selon l'une quelconque des revendications prècèdentes, dans lequel ledit plateau présente à sa périphérie externe une jupe, caractérisé en ce que ledit insert est noyé dans ladite jupe.

6. Plateau selon l'une quelconque des revendications prècèdentes, caractérisé en ce que la zone de fixation s'étend axialement à distance du plateau de réaction (21).

7. Plateau selon l'une quelconque des revendications prècèdentes, caractérisé en ce que la zone de fixation présente à son extrémité libre un rebord d'orientation transversale.

8. Plateau selon l'une quelconque des revendications prècèdentes, caractérisé en ce que le couvercle est fixé par soudage sur la zone de fixation des inserts (40,41-140-240-340-440-540-640).

9. Plateau selon la revendication 8, caractérisé en ce que 5 le couvercle présente à sa périphérie externe un rebord (35) d'orientation axiale engagé dans l'alésage interne de la zone de fixation (40) de forme annulaire de l'insert (40,41).

10. Plateau selon la revendication 9, caractérisé en ce que le couvercle est fixé par soudage, par son rebord (35), sur 0 l'extrémité libre de la zone de fixation (40).

11. Plateau selon la revendication 1, caractérisé en ce que la zone de fixation (240) présente des pattes épaulées (245) pour fixation par sertissage du couvercle (226) sur la zone de fixation (240).

12. Plateau selon l'une quelconque des revendications prècèdentes, caractérisé en ce que la zone de fixation (540) présente des pattes épaulées pour fixation par agrafage du couvercle sur la zone de fixation.

13. Plateau selon l'une quelconque des revendications prècèdentes, appartenant à un volant moteur, comportant deux masses (1,2) montées mobiles l'une par rapport à l'autre à l'encontre d'organes élastiques (8), caractérisé en ce que la zone de fixation (40) de l'insert présente localement des emboutis (45) pour montage d'une rondelle de frottement (51) appartenant à un dispositif d'hystérésis (50) intervenant entre les deux masses (1,2) du volant moteur.

14. Plateau selon l'une quelconque des revendications prècèdentes, appartenant à un volant moteur, comportant deux masses (1,2) montées mobiles l'une par rapport à l'autre, à l'encontre d'organes élastiques à action circonférentielle, caractérisé en ce que ledit insert (640) est prolongé pour s'étendre en saillie sur l'autre face du plateau de réaction (21) et offrir des pattes (646) pour appui des organes élastiques (116).

## Claims

1. Reaction plate of mouldable material for a friction clutch having a cover plate (26, 126, 226), especially for motor vehicles, characterised in that it includes a fixing insert (40,41-140-240-340-440-540-640) anchored in the mass of the said reaction plate (21), being embedded in the latter, and in that the said insert has, projecting in the vicinity of the outer periphery of the reaction plate 21, a fixing zone (40, 140, 240, 340, 440, 540, 640) for fixing the cover plate (26) of the friction clutch.

2. Plate according to Claim 1, characterised in that the insert (40,41-140-240-340-440-540-640) has hooking means (44, 144) for enhancing its anchorage in the reaction plate (21).

3. Plate according to Claim 2, characterised in that the insert (40,41-140-240-340-440-540-640) has holes (144) for anchoring it in the reaction plate (21).

4. Plate according to any one of the preceding claims, characterised in that the insert (40,41-140-240-340-440-540-640) includes an anchor zone extending transversely in the transverse main portion of the reaction plate (21).

5. Plate according to any one of the preceding claims, in which the said plate has a skirt at its outer periphery, characterised in that the said insert is embedded in the said skirt.

6. Plate according to any one of the preceding claims, characterised in that the fixing zone extends axially at a distance from the reaction plate (21).

7. Plate according to any one of the preceding claims, characterised in that the fixing zone has a transversely oriented flange at its free end.

8. Plate according to any one of the preceding claims, characterised in that the cover plate is secured by welding on the fixing zone of the inserts (40,41-140-240-340-440-540-640).

9. Plate according to Claim 8, characterised in that the cover plate has at its outer periphery an axially oriented flange (35) engaged in the internal bore of the annular fixing zone (40) of the insert (40, 41).

10. Plate according to Claim 9, characterised in that the cover plate is secured, by welding through its flange (35), on the free end of the fixing zone (40).

11. Plate according to Claim 1, characterised in that the fixing zone (240) has shouldered lugs (245) for securing the cover plate (226) by seaming on the fixing zone (240).

12. Plate according to any one of the preceding claims, characterised in that the fixing zone (540) has shouldered lugs for securing the cover plate by clipping onto the fixing zone.

13. Plate according to Claim 1, forming part of an engine flywheel comprising two masses (1, 2) which are mounted for movement of one with respect to the other against the action of elastic members (8), characterised in that the fixing zone (40) of the insert has local press-formed portions (45) for mounting a friction ring (51) which is part of a hysteresis device (50) acting between the two masses (1, 2) of the engine flywheel.

14. Plate according to any one of the preceding claims, forming part of an engine flywheel, comprising two masses (1, 2) which are mounted for movement of one with respect to the other against the action of circumferentially acting elastic members, characterised in that the said insert (640) is extended in length so as to project on the other face of the reaction plate (21) and to offer lugs (646) for supporting the elastic members (116).

## Patentansprüche

1. Gegenanpreßplatte aus Gußwerkstoff für eine Reibungskupplung, die mit einem Deckel (26, 126, 226) versehen ist, insbesondere für Kraftfahrzeuge , **dadurch gekennzeichnet,** daß sie einen Befestigungseinsatz (40,41-140-240-340-440-540-640) umfaßt, der in der Masse der besagten Gegenanpreßplatte (21) verankert ist, indem er in diese eingelassen ist, und daß der besagte Einsatz vorspringend, in der Nähe des Außenrands der Gegenanpreßplatte (21), einen Befestigungsbereich (40,140,240,340,440, 540,640) zur Befestigung des Deckels (26) der Reibungskupplung aufweist.

2. Gegenanpreßplatte nach Anspruch 1 , **dadurch gekennzeichnet,** daß der Einsatz (40,41-140-240-340-440-540-640) Einhakmittel (44,144) umfaßt, um seine Verankerung in der Gegenanpreßplatte (21) zu verstärken.

3. Gegenanpreßplatte nach Anspruch 2 , **dadurch gekennzeichnet,** daß der Einsatz (40,41-140-240-340-440-540-640) Löcher (144) für seine Verankerung in der Gegenanpreßplatte (21) aufweist.

4. Gegenanpreßplatte nach einem der vorangehenden Ansprüche, **dadurch gekennzeichnet,** daß der Einsatz (40,41-140-240-340-440-540-640) einen Anschlußbereich umfaßt, der sich in Querrichtung im quer angeordneten Hauptteil der Gegenanpreßplatte (21) erstreckt.

5. Gegenanpreßplatte nach einem der vorangehenden Ansprüche, wobei die besagte Platte an ihrem Außenumfang eine Einfassung aufweist , **dadurch gekennzeichnet,** daß der besagte Einsatz in die besagte Einfassung eingelassen ist.

6. Gegenanpreßplatte nach einem der vorangehenden Ansprüche, **dadurch gekennzeichnet,** daß sich der Befestigungsbereich axial in einem Abstand von der Gegenanpreßplatte (21) erstreckt.

7. Gegenanpreßplatte nach einem der vorangehenden Ansprüche, **dadurch gekennzeichnet,** daß der Befestigungsbereich an seinem freien Ende eine quer ausgerichtete Randleiste aufweist.

8. Gegenanpreßplatte nach einem der vorangehenden Ansprüche, **dadurch gekennzeichnet,** daß der Deckel durch Verschweißen am Befestigungsbereich der Einsätze (40,41-140-240-340-440-540-640) befestigt ist.

9. Gegenanpreßplatte nach Anspruch 8 , **dadurch gekennzeichnet,** daß der Deckel an seinem Außenrand eine axial ausgerichtete Randleiste (35) aufweist, die in die Innenbohrung des ringförmigen Befestigungsbereichs (40) des Einsatzes (40,41) eingesetzt ist.

10. Gegenanpreßplatte nach Anspruch 9 , **dadurch gekennzeichnet,** daß der Deckel durch Verschweißen mit seiner Randleiste (35) am freien Ende des Befestigungsbereichs (40) befestigt ist.

11. Gegenanpreßplatte nach Anspruch 1 , **dadurch gekennzeichnet,** daß der Befestigungsbereich (240) Schulteransätze (245) für die mittels Aufpressen erfolgende Befestigung des Deckels (226) auf dem Befestigungsbereich (240) aufweist.

12. Gegenanpreßplatte nach einem der vorangehenden Ansprüche , **dadurch gekennzeichnet,** daß der Befestigungsbereich (540) Schulteransätze für die mittels Aufklammern erfolgende Befestigung des Deckels (226) auf dem Befestigungsbereich aufweist.

13. Gegenanpreßplatte nach einem der vorangehenden Ansprüche, die zu einem Schwungrad gehört, das zwei Massen (1,2) umfaßt, die im Verhältnis zueinander beweglich entgegen elastischen Organen (8) gelagert sind, **dadurch gekennzeichnet,** daß der Befestigungsbereich (40) des Einsatzes örtlich Vertiefungen (45) für das Einsetzen einer Reibscheibe (51) aufweist, die zu einer Hysteresevorrichtung (50) gehört, die zwischen den beiden Massen (1,2) des Schwungrads zum Einsatz kommt.

14. Gegenanpreßplatte nach einem der vorangehenden Ansprüche, die zu einem Schwungrad gehört, das zwei Massen (1,2) umfaßt, die im Verhältnis zueinander beweglich entgegen umfangsmäßig wirksamen elastischen Organen gelagert sind , **dadurch gekennzeichnet,** daß der besagte Einsatz (640) verlängert ist, um sich vorspringend auf der anderen Seite der Gegenanpreßplatte (21) zu erstrecken und Ansätze (646) für die Auflage der elastischen Organe (116) zu bilden.
